Europäisches Patentamt

European Patent Office

Office européen des brevets

(11) Publication number: **0 408 510 A2**

# EUROPEAN PATENT APPLICATION

(21) Application number: 90810521.6

(22) Date of filing: 09.07.90

(51) Int. Cl.⁵: **B29C 67/22**, F25D 23/06, E04C 2/20

(30) Priority: 11.07.89 CH 2572/89
11.07.89 CH 2571/89

(43) Date of publication of application:
**16.01.91 Bulletin 91/03**

(84) Designated Contracting States:
**AT BE CH DE DK ES FR GB GR IT LI LU NL SE**

(71) Applicant: WELKA ELEKTRA ENGINEERING
CORPORATION LTD
Austrasse 42
FL-9490 Vaduz(LI)

(72) Inventor: **Caimi, Angelo**
**Via Bossi 35a**
**6830 Chiasso(CH)**
Inventor: **Hofer, Anton**
/
**6853 Ligornetto(CH)**

(74) Representative: **Baggiolini, Raimondo et al**
**Patent Attorneys**
**Fiammenghi-Fiammenghi-Racheli Via San**
**Gottardo 15**
**CH-6900 Lugano(CH)**

(54) **Procedure and apparatus for the manufacture of hollow modular panels and also the panels thus obtained for therma, acoustic and electrical insulation and for various kinds of radiation.**

(57) The procedure is aimed at the manufacture of hollow modular panels including a shell consisting of a pair of rolled sections (1), surrounded by a seal (8), enclosing the filling material (14a) and consists of arranging a series of strips (18, 19, 20, 21) on a supporting plate (16) so as to create a semimold defining a cavity complementary to the said shell. After placing the said shell in the cavity and clamping it between the supporting plate and another plate, the filling material (14a) wit the desired characteristics is then injected inside it.

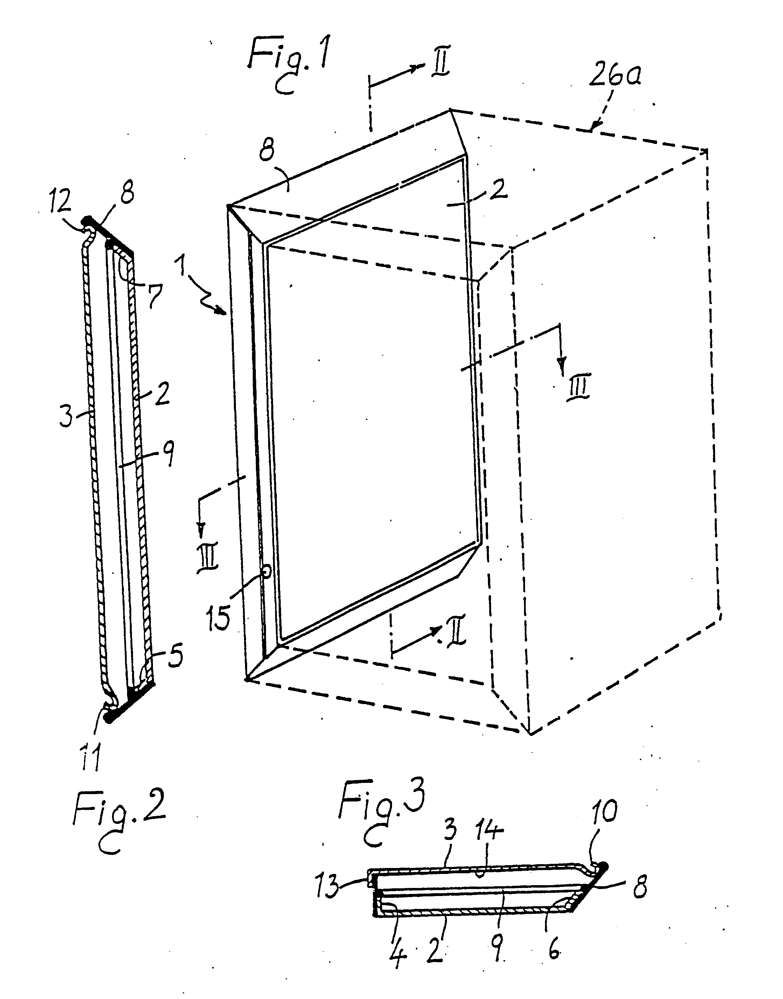

A refrigerator container (fig. 1), even polyhedrically shaped, is obtained by assembling a plurality of said panels, having inclined perimetral faces such as to allow two adjacent panels to be coupled by means of components which hook on to rims (11, 12 fig. 2) along their external edges.

Fig. 1

Fig. 2

EP 0 408 510 A2

Fig.5

b)   a)

# PROCEDURE AND APPARATUS FOR THE MANUFACTURE OF HOLLOW MODULAR PANELS AND ALSO THE PANELS THUS OBTAINED FOR THERMAL, ACOUSTIC AND ELECTRICAL INSULATION AND FOR VARIOUS KINDS OF RADIATION.

The subject of the present invention is a procedure and the apparatus for the manufacture of hollow panels, a panel obtained with this procedure, and the refrigerator (or anyway insulating) containers obtainable by assembling said panels. The invention is designed for use in the manufacture" of panels for thermal, acoustic or electrical insulation or for various kinds of radiation or hollow panels for furniture. The technical aim of the present invention is to devise a procedure and apparatus which are particularly interesting from an economic point of view since they provide the possibility of producing finished panels ready for assembly without the need for any further finishing processes and even the possibility of including the necessary components for the functioning of the apparatus finally produced.

This purpose is achieved with a procedure for the manufacture of hollow panels consisting of a pair of rolled sections enclosing filling material, which is characterized by the fact that it involves the arrangement of a series of strips on a supporting plate of a forming mold so as to define a cavity complementary to the shape of the panel, the preparation of a shell consisting of the said rolled sections and a peripheral seal, the positioning of the said shell in the said cavity, the clamping of this shell between the said supporting plate and another plate so that the said shell forms a hermetically sealed chamber, through a hole in the edge of the said shell, of filling material with the desired characteristics.

The apparatus for the achievement of this procedure is characterized by the fact that it includes a supporting plate, devices for fixing strips to this plate so as to define a semimold containing a cavity to house the said shell, a second plate which can be pressure applied to the said strips to hold the said shell firmly inside the said cavity and injector devices which can be inserted inside the chamber formed by the said shell to inject the filling material.

Other advantages and characteristics of this invention are more clearly seen in the detailed descriptions which follows based on the enclosed deawings in which:

figure 1 shows a perspective view of a hollow panel produced with the procedure subject of this invention;

figure 2 is a cross-section view along the II-II plane of figure 1;

figure 3 is a cross-section view along the III-III plane of figure 1;

figures 4a, b, c show, in exploded view, the elements which make up the panel shell and the mold plate which acts as a support for the strips defining the cavity housing the shell;

figure 5a shows a cross-sections of the mold in figure 4 in a closed position;

figure 5b shows the same mold, open, with the closure plate removed;

figure 6 shows a diagrammatic perspective view of a plant for the preparation of a series of panels;

figure 7 shows a perspective cross-section of a mold for the simultaneous of a number of panels;

figure 8 shows an exploded cross-section of one of the panels obtained with the mold in figure 7;

figure 9 shows, in perspective cross-section, some detailes of the mold in figure 5;

figures 10 and 11 show, in cross-section, a mold and a detail of a panel assembled inside the mold for the production of another type of panel;

figure 12 shows a similar view to that in figure 4 and relative to another type of panel;

figure 13 shows an exploded perspective view of a refrigerator constructed with hollow panels obtained by means of the procedure and the apparatus which are the subject of the present invention.

figure 14 shows the coupling area of two panels placed at 90 degrees to each other;

figures 15 and 16 show the coupling area of 3 panels which form a trihedron;

figures 17 and 18 show two more couplings of two panels placed at 90 degrees to each other;

figure 19 shows a coupling section for connecting 4 panels;

figure 20 shows two coupling sections to be connected by another section allowing the connection of 4 panels;

figure 21 shows a sectional view of coupled panels for a chest refrigerator with hermetic lid, particular attention being paid to the coupling areas;

figure 22 shows a detailed view of the area connecting the panels in figure 12;

figure 23 shows another way of connecting adjacent panels;

figure 24 shows the section of the cap which closes the angular area of the coupling in figure 14;

figures 25, 26, 27 and 28 show other ways of using the above panel couplings;

figure 29 shows, in cross-section, a way of assembling a shelf or a partition at right-angles to these panels in order to create several adjacent cold stores;

figure 30 shows the assembly of an upper and lower panel with a side panel, and the supporting system of a shelf at right-angles to the above mentioned side panel;

figures 31, 32, 33 and 34 show the coupling area of two panels placed at an angle of more than 90 degrees;

figure 35 shows the coupling area of two 90 degree panels according to another variation;

figures 36, 37, 38, 39, 40 show different types of coupling sections;

figure 41 shows a perspective partial view of a refrigerator side made with panels assembled with the sections shown in figures 36 and 37;

figure 42 shows the corner area of a trihedron of panels assembled as per figure 18;

figure 43 shows the corner area of a trihedron of panels assembled according to a further variation with internal coupling section;

figure 44 shows a perspective view of the side of a refrigerator made with panels assembled as per figure 34;

figure 45 shows an exploded perspective view of a refrigerator according to a further variation;

figure 46 shows an exploded perspective view of a refrigerator according to a third variation;

figure 47 shows the further coupling of 4 panels meeting at a corner;

figure 48 shows the coupling of the external rolled sections of two panels positioned at 90 degrees;

figure 49 shows another variation of a refrigerator according to the invention and finally;

figure 50 shows a section which connects adjacent panels.

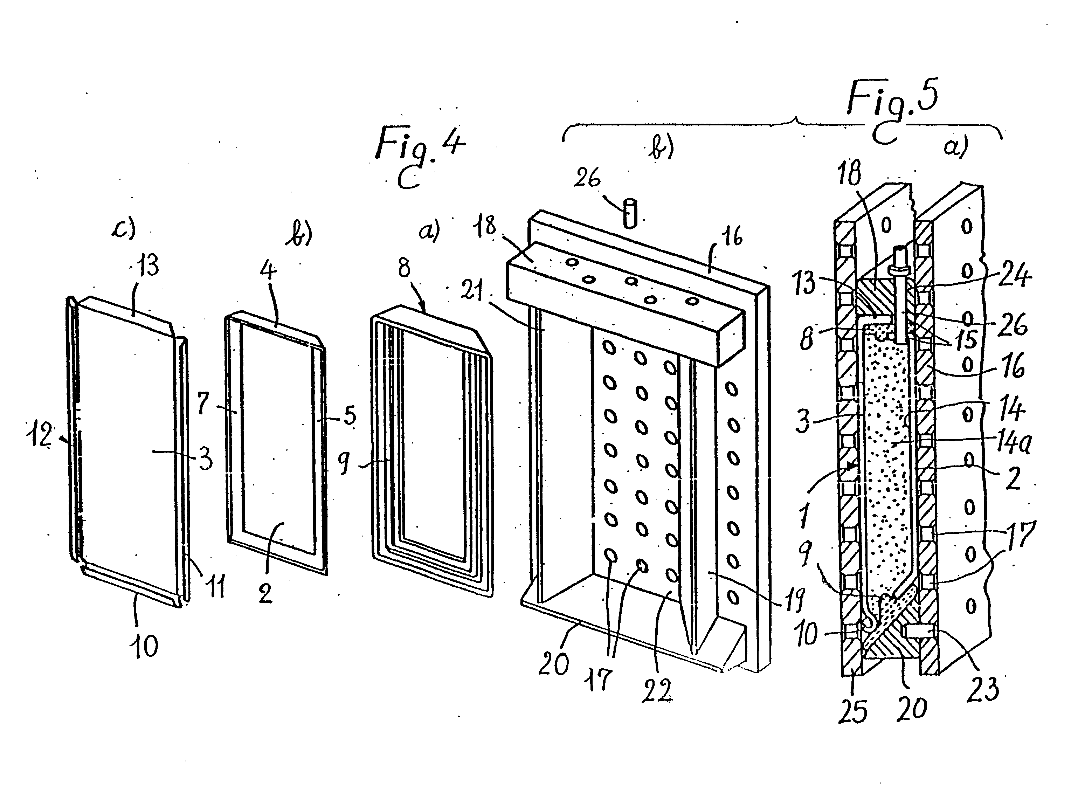

Referring to figures 1-3, 1 indicates the shell of the hollow panel as a whole which includes a pair of rolled sections 2, 3 of a rectangular shape and plane-parallel to one another. For greater clarity it is assumed that, in the example illustrated, the panel has a thermoinsulation function and is to be used in the construction of refrigerators. It is however taken for granted that the same concept is applicable to panels to be used as barriers for acoustic and electric insulation and against heat and radiation of various kinds. The rolled section 2 has four peripheral flanges of which one flange 4 is perpendicular to the rolled section plane, while the other three flanges 5, 6, 7, which project from the other sides, are inclined with respect to the rolled section plane. In the example illustrated it is assumed that the flanges are inclined for example by 45 degrees. The rolled section therefore resembles a tray with three peripheral borders raised by 45 degrees and one perpendicular to the back.

Around the rolled section 2 a seal 8 is fitted made of elastomeric-type elastic material suitable for the functions for which the container is designed, which includes a band which surrounds the external part of the flanges 4-7 and is premolded in such a way as to follow the orientation of the said flanges.

The seal 8 has an internal rib 9 which stretches along its center-line surface and acts as a stop for the edge of the flanges 4-7.

The edges of the rolled sections 3 corresponding to the inclined flanges 5, 6, 7, have a longitudinal rim 10 and two transversal rims 11, 12 that are bent outwards to form a hook, while on the side corresponding to the flange 4 there is a longitudinal flange 13 perpendicular to the rolled section 3. The rolled section 3 is placed against the seal 8 so that the back of the rims 10, 11, 12, rest against the inner surface of the seal 8 and the flange 13 adheres to the outside of the same. The seal 8, in correspondence with the rims 10, 11, 12, has an appropriate bulge which surrounds the out side of these rims.

The pair of rolled sections 2, 3 can therefore be positioned at a reciprocal distance corresponding to the width of the seal 8 and togerther with the same create the said shell 1 which encloses the chamber 14 designed to accommodate filling material 14a with appropriate thermoinsulating characteristics or sutable for the other types of insulation described above. This material may be liquid, self-hardening or thermo-hardened adhesive. or "loaded" with inert materials.

The filling material is inserted through a hole 15 in the peripheral wall, for example through the flange 4 of the rolled section 2 and the surrounding portion of the seal 8. The position of the hole 15 may however be modified according to constuction requirements.

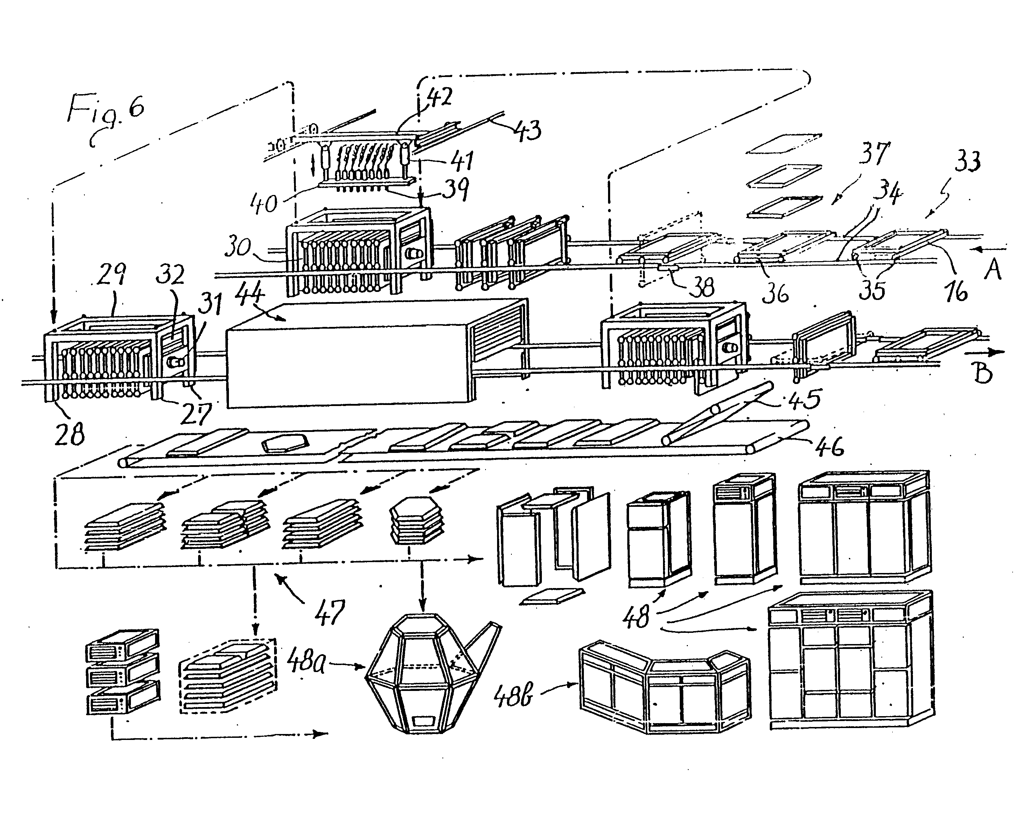

To perform the filling operation, the aforementioned shell 1 (see figure 5) is positioned and locked in an appropriate mold, which consists of a first supporting plate 16 containing a series of holes 17 arranged in orderly rows. The plate 16 acts as a support for four metal strips 18, 19, 20, 21 so as to form a semimold with a cavity 22 to house the panel shell.

The strips are fitted to the plate 16 with pins 23 which protrude from the strips and fit into the oles 17. The strips can also be positioned with an automatic power-driven system to obtain panels with different measurements and thicknesses with appropriate devices fitted into the holes 17 and controlled by a general program when panel production takes place in a fully-automated factory.

The strips 19, 20, 21 have inclined inner surfaces to provide the correct support for the inclined surfaces of the shell, and their height is more or less the same as the thickness of the final panel.

One of the strips (in the example strip 18) has a hle 24 lined-up with the hole 15 of the shell.

The panel is completed by placing the shell 1 in the cavity 22 of the semimold 16, 18-21 and by placing a second plate 25, identical to the plate 16, on top of it. Then, by clamping the two plates 16 and 25 together, the cavity 22 is closed and the shell immobilized. The thickness of the shell is such that, when the plate 25 rests against the strips 18-21, the seal 8 is compressed against the edges of the rolled sections. More precisely, as a result of the clamping of the plates 16 and 25, the adges of the flanges 4, 5, 6 and 7 of the rolled section 2 are held firmly against the internal rib 9 of the seal 8, while the rims 10-12 of the rolled section 3 are pressed against the inclined inner surfaces of the seal 8. On the side of strip 18, the seal 8 is partially covered on the outside by the lfange 13, and its edge fits inside the angle formed by the said flange and the ro lied section 3. As a result of the force with shich the rolled sections 2, 3 are pressed against one another, the seal 8 closes the join which surrounds the shell 1 and the chamber 14 is therefore hermetically sealed and can be filled by the injection of suitable material. Injection is performed with a nozzle 26 nserted in the chamber 14 through the hole 24 in the strip 18 and the hole 15 in the shell.

If the panel is designed for the production of refrigerators, as in the case described, the filling material will consist of thermoinsulating material. If however the panel is designed to create an acoustic barrier, the material will be sound-absorbent, or will provide electrical insulation or suitable for various kinds of radiation in the other cases.

As can be seen in the description above, the panel described is suitable for the production of parallelepiped shaped containers. The two perimeter surfaces of the shell both inclined by 45 degrees and aligned along the plane of the flanges 5 and 7 of the rolled section 2 making it possible to place panels at 90 degrees to each other. The panels can be assembled using K-shaped coupling sections to be hooked onto the rims 10, 11 of adjacent panels.

Thus it is possible to create a rectangular surrounding casing 26a (shown with broken lines in figure 1) with the front edges, consisting of the flanges 4 and 13, which are perfectly flat except for the step formed where the flange 13 overlaps the seal 8, but which is almost imperceptible due to the extreme thinness of the relied section 3.

The side of the casing 26a opposite to the front, that is the back, has four inclined edges aligned with the flanges 6 and designed to receive a panel with complementary 45 degree inclined edges. This panel therefore forms the back of the refrigerator and can be fixed with the same assemply strips as those used to assemble the panels forming the ring-casing.

The various possibilities of assembling different panels one to another will be explained later in the present description.

The procedure described can be used for the simultaneous production of a series of panels. A machine suitable for this purpose is illustrated diagrammatically in figure 6. It includes a frame mainly consisting of two head-pieces comprising a pair of uprights 27, 28 connected at the top by a frame 29. The head-piece 28 supports a fixed partition 30 while the head-piece 27 supports a jack 31 which moves the partition 32.

A numer of semimolds are arranged between the partitions 28 and 32: these are plates 16 with the relative strips 18-21, so that each plate 16 can close the cavity 22 of the adjacent semimold.

The preparation of the semimolds, i.e. the fitting of the strips 18-21 on the plate 16, is performed in a station 33 where the plates are infed along a horizontally positioned track 34.

For this purpose the plates 16 are fitted, in correspondence with the corners, with sliding grooved wheels 35. Coaxial pins 36 jut out between each pair of wheels, forming an axis around which the semimolds turn to assume a vertical position. After leaving the station 33, the semimolds move on to the subsequent station 37 where the shell is positioned in the cavity 22. Downstream of the station 37 the semimolds containing the shells 1 are turned by 90 degrees and stored one against the other before insertion between the head-pieces 27, 28 of the grame. To facilitate the turning of the semimolds it is possible for example to envisage that a section 38 of the track 34 can be removed so that the grooved wheels 35 arranged on the rear side with respect ot the infeed direction A of the semimolds can drop below the track. The plates 16 with the relative strips and the sheels positioned in the cavity 22, after insertion between the partitions 30, 32, are clamped together one against the other by means of the jack 31.

The filling material is then injected into the chamber 14 with a battery of nozzles 39 fitted on a rod 40 which can be raised and lowered by means of appropriate hydraulic jacks 41.

The battery of nozzles 39 is mounted on a carriage 42 which moves along tracks 43.

The pack of semimolds 16, 18-21 is then transferred in the direction B through a tunnel 44 where the injected material is subjected to thermal treatment. Downstream of the tunnel 44 the pack of semimolds is automatically opened and the finished panels are transferred by means of a chute 45 which drops them onto a conveyor 46 from which they are automatically picked up according to their various shapes and sizes and stored in an automated warehouse 47.

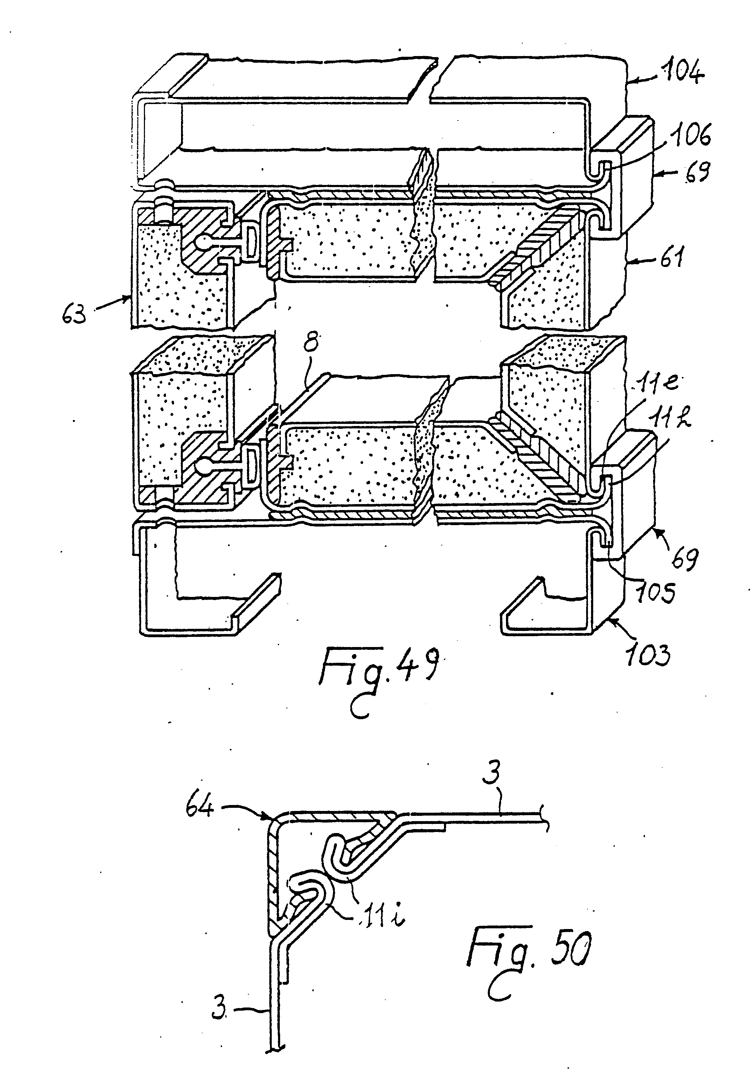

The panels can then be automatically collected, according to the requirements of the orders in the computer program, for the production of refrigerators 48 with the various capacities and shapes, such as for example: the polyhedric figure 48a and the multi-corner refrigerator counters 48b.

As can be seen the invention described fully achieves the set aims. In particular it is possible to replace the strips 18-21 with others of different lenghts and shapes which can be positioned on the plate 16 in accordance with the shape and size of the panel to be produced.

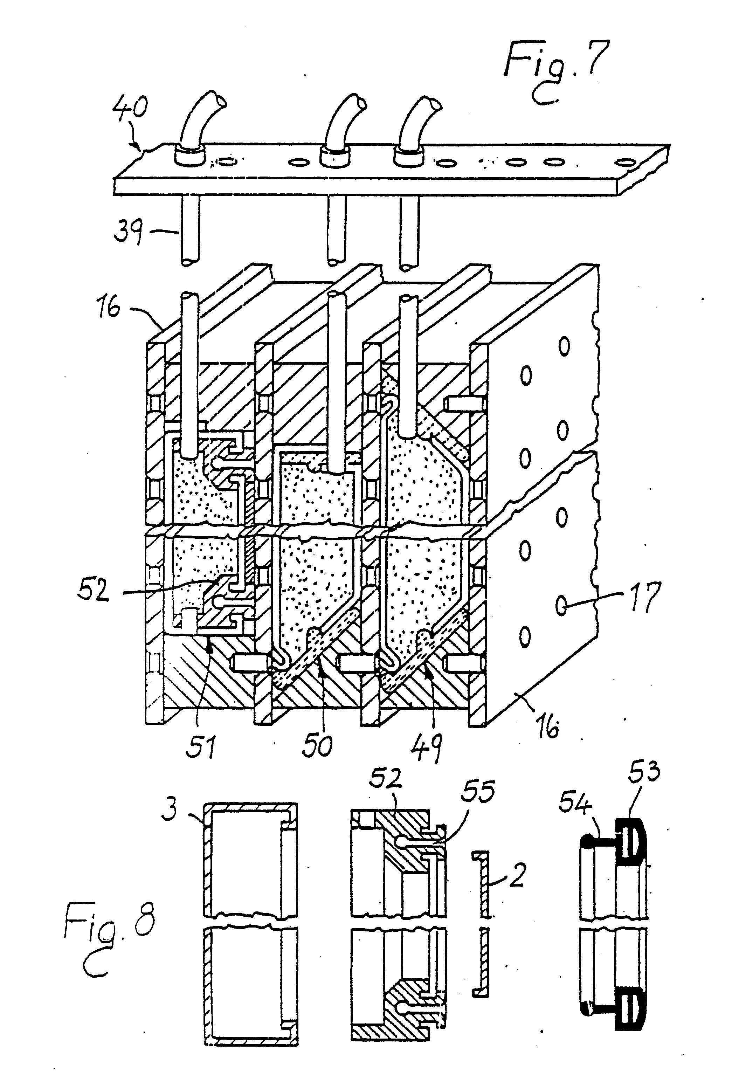

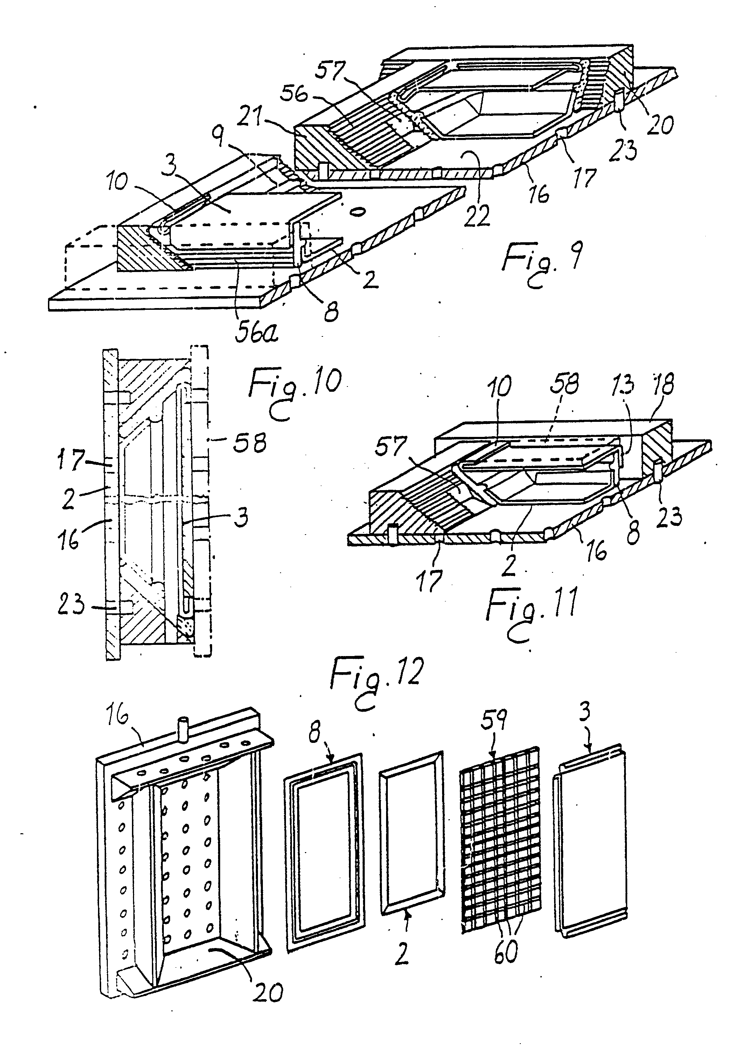

Figure 7 shows the different cross-section of the strips defining the three different cavities designed to hold the shells which correspond to the relative panels forming the refrigerator sides.

The number 49 is generically used to indicate a panel with four sides inclined by 45 degrees used for the back side of the refrigerator. The number 50 is generically used to indicate the panel in figures 1-3 with three sides inclined by 45 degrees and one flat front side and which can therefore be used to form the two lateral sides and the two top and bottom sides of the refrigerator. Finally, 51 is used to indicate the panel to be used for the door to close the refrigerator, with a seal 52 which, besides guaranteeing the hermetic sealing of the chamber to house the filling material is designed to hold another seal 53 which fits against the flat front edges of the panels 50 surrounding the opening providing access to the refrigerator. As can be seen in figure 8, the seal 53 has a protuberance 54 which is designed to lock into a slot 55 in the seal 52.

The invention described may be subject to numerous modifications and variations, (in particular the joining of the panels at angles other than 45 degrees to create the polyhedric figure illustrated in figure 6) all of which are covered by the invention.

Figure 9 displays a solution in shich the strips 18-21, on the surfaces defining the cavities 22, are knurled 56 and therefore grip onto the seals 8, blocking the shell 1 to prevent it from escaping during plate movement. As an advantage, the seals 8 have a rib 56a on their outside surface which is designed to facilitate the grip of the knurling 56. The strips are also fitted with ejectors 57 which, by penetrating into the cavity 22, determine the detachment of the finished panel and facilitate its removal.

Figures 10, 11 illustrate another variation which aims at creating a uniform pressure on the shell during the closing of the molds when perfect adherence of the rolled.sections to the plates is not obtained due to bumps or protrusions which in the type shown in figures 10, 11 are created by the peripheral rims. The variation involves the insertion in the mold of a sheet of metal 58 of the same thickness as the height of the peripheral rims and in contact with the outside rolled section surfaces.

Finally figure 12 shows a solution which envisages the positioning, inside the shell, of an insert 59 which can occupy part of the volume. In this way it is possible to achieve a marked saving by using more economical material for the insert than that used for injection, contributing towards an increase in the structural resistance or insulation of the panel. To permit the perfect filling of the shell, the insert 59 contains channels 60 designed to convey the injected material to every recess of the shell. If required, the insert 59 can consist of material which provides the best insulation and/or structural performance.

In practice the filling material may have special features depending on the final panel requirements. For example, if the panels are to be used for lining furnace muffles, the filling material will have higher temperature refraction or insulation characteristics, whereas in the panels for the production of dishwashers the filling material will have to guaranteee adequate acoustic insulation.

In the next part of this description, as already mentioned, the advantages achieved by using the insulating hollow panels as claimed in claim 9 will be described more in details. They are produced, accordingly to claim 1, in order to assembly the refrigerator containers which also form the subject of the present invention.

It is to point out that, in the rest of the following description, the word refrigerator will include freezers, refrigerated counters, display and working cases and cabinets, refrigerated containers, etc.

It is known that the technique which is used today to construct refrigerators as well as domestic and industrial freezers, refrigerated counters, display and working cases and cabinets for bars and restaurants is the monolithic container type.
This container is obtained by the use of different molds according to the model and size, which make it possible to produce an internal and an external shell between which the most appropriate insulating foam is enclosed.

However, this technique is conditioned by the extraction requirements of the molds which do not permit the formation of undercuts and reliefs in the walls and means that the container must have a shape similar to a parallelepiped.
The monolithic structure of today's refrigerators requires very high setting up costs for the molds (the cost applies to each model and series of sizes) and makes it necessary to have several parallel lines of production which are not very flexible. The structure also conditions the size of the entire handling line for larger molds and container cabinets, requires much bigger storage areas and on-line installation of the cold generator constructed with very complex equipment, electrical conductors and fluid ducts, and control units which involve several walls, making the entire system unmovable.

The aim of the present invention is to solve the problem described above, which means producing a refrigerator container with hollow panels completely ready to be assembled in different geometrical configurations without any further finishing requirements, and with compact cold genrators using static of forced air circulation evaporators. Furthermore, the present invention will provide a refrigerator, whaterver its method of construction, made of very simple, reliable and inexpensive hollow panels.

According to the present invention, this task and this aim are fulfilled by this refrigerator, which is characterized by a series of hollow panels as claimed in claim 13, that is composed of a shell filled with thermoinsulating material, and with inclined perimetral edges to allow the coupling of two adjacent panels, which hook on to the rims along the panel edges by sliding.

The advantages of such a refrigerator, as well as reducing setting up costs due to much simpler production lines and more efficent automated storage areas,can be summerized as follows:

- the production of panels can be carried out wuthout special molds in an automated factory controlled by computers;
- the panel dimensions can be obtained, according to the order received from the client, using thermoformed plastic coils ir rolled sections coils, surface-treated in any way, with dimensions as close as possible to the required size to limit the amount of waste as far as possible;
- the finished panels are coded and automatically sent to an automated storage area or to the automatic assembly of the finished product (refrigerator, freezer, etc.). The panels can be supplied either unassembled or fully assembled. In the first case the cold generators are supplied separately ; in the second case they are already installed in the refrigerator;
- the assembly of the components can be completely controlled by the computer, which calls up the necessary components from, the automatic storage area and transfers them to the assembly departement, according to the clients'orders on which pruchase, production and stocking orders are based;
- when unassembled refrigerators and/or freezers are requested an automatic packing centre can be forseen;
- the great reduction in volume wuth the same weight, thanks to the compactness obtained with the unassembled refrigerator, determines a high reduction in costs for handling, stocking and transportation - both internal and, moreover, long distance.

The details of the invention will be much clearer from the following description together with the attached and already listed drawings.

Referring in particular to figures 1-7, the refrigerator in question is composed of hollow panels.

The panels are formed by a pair of rectangular and plane-parallel rolled sections 2, 3, and by a seal 8.

The rolled sections 2, which remains inside the refrigerator and is thus called internal, has 4 peripheral flanges, so that it looks like a tray with raised edges. More specifically, the internal sections of the panels which will form the lower and upper walls and the sides of the refrigerator have a flange 4, which runs along the front side and is perpendicular to the plane of the section, while the flanges 5, 7 which run along the other three sides are inclined with respect to the plane of the section, preferably at 450, The internal section of another fourth panel 61 which forms the back wall of the refrigerator has, on the other hand, all four flanges inclined preferably at 45°, like the flanges 5 and 7, with respect to the plane of the section.

Around the section 2 is said seal 8 made from elastomeric material, consisting of a band which covers the flanges 4, 5, 7 externally and is premolded or preformed from a welded strip, after end cut-off of the overlapping area in order to follow the orientation of the said flanges. The seal 8 has an internal rib 9 which runs preferably along its center line and acts as a stop for the edge of the flanges 4, 5,17.

Along the edges of the section 3, in correspondence with the edges of the inclined flanges 5, 7, is a longitudinal rim 10 and two transveral rims 11, 12 bent outwards in the form of a hook while on the side corresponding to the flange 4 is a corresponding longitudinal flange 13, perpendicular to the section. The section 3 is placed alongside the seal 8 so that the backs of the rims 10, 11, 12 rest on the inside of the said seal while the flange 13 rests firmly against the outside of the seal.

The two sections 2, 3 can therefore be positioned at a reciprocal distance corresponding to the width of the seal 8 and together with the latter form a shell 1 which encloses a chamber 14 designed to receive filling material 14a with appropriate thermoinsulation, sound absorption and electrical insulation characteristics. The filling material 14a is inserted through a hole 15 in the shell, for example through the seal 8 and a flange 7 of the section 2.

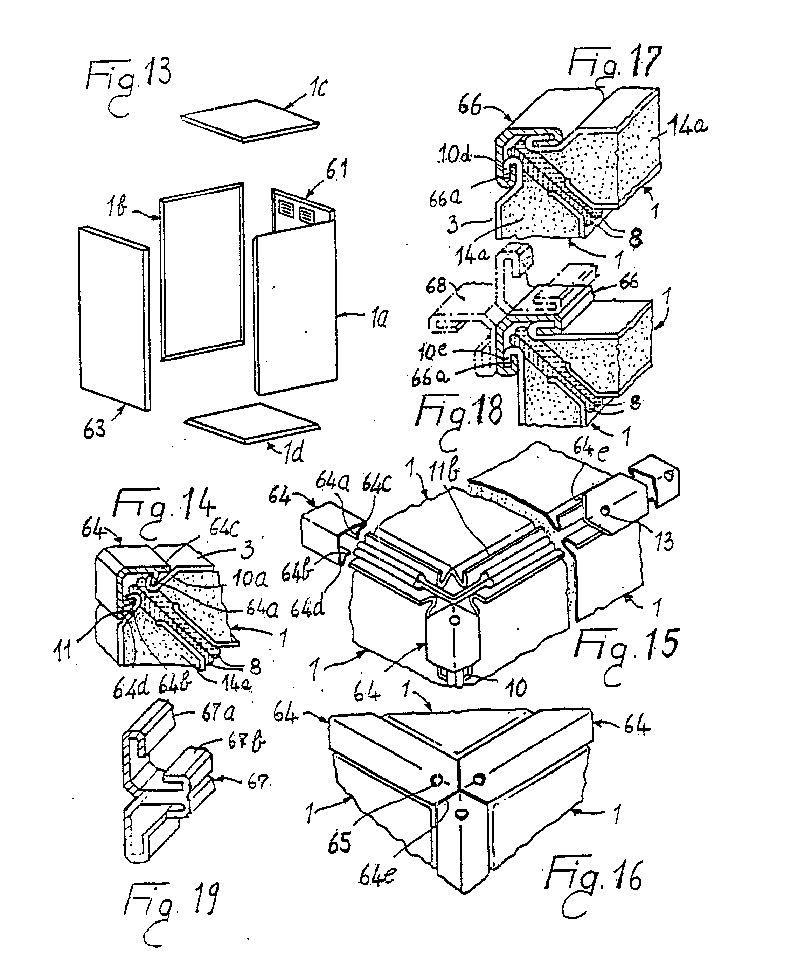

The hollow panels 1 are made in the dimensions foreseen for the construction of the regrigerator, as shown in fig. 13 in which the side walls are indicated with 1a, 1b, the back wall with 61, and the upper and lower walls with 1c, 1d of a refrigerator container with a front-closing door 63; in particular the perimeter faces inclined at 450 permit the positioning at 90° of the panels in order to form a parallelepiped container. It is however clear that, with a different angling of the inclined perimeter faces and by varying the angle of the front stops for the door closure, it is possible to obtain various other geometrical figures.

The assembly of a pair of perpendicular panels (see figure 14) is achieved by means of coupling sections 64 designed to hook together and clamp, by sliding along them, the adjacent rims 10, 11 of these panels. The coupling sections 64 are L-shaped in order to cover the angle formed longitudinally by the adjacent panels, and have a pair of appropriately angled ribs 64a, 64b on the inside which hook onto the rims 10, 11 (see figures 14, 15, 16).

It should be noted that the ribs 64a, 64b clamp the rims 10, 11 together, between which the seals 8 of the two panels are also clamped; the edges 64c, 64d of the coupling sections rest instead on the rolled sections 3 preventing the reciprocal sliding of the coupled panels along the contact plane of the seals 8, and providing the container with an even greater structural resistance than a monolithic container.

Figure 15 shows a corner area of the coupling of three converging panels, placed at right-angles: it is however possible to obtain geometrical figures joined at different angles with planes which are not at right-angles to each other.

It should be noted that the converging ends of the coupling sections 64 are cut-off 64e in order to combine in covering the vertex of the trihedron formed by the panels.

This figure also shows the holes 65 made in the cut-off ends of the coupling sections for the pulling hooks which are used to slide the sections along the rims 10, 11 for the insertion or extraction of the sections when assembling or disassembling the container.

Figures 17, 18, 19 show various construction forms of the coupling sections. In particular, the angular section 66 in fig. 17 consists of an L-shaped section with the edges 66a turned back inwards to form a U, in order to hook on to the corresponding U-shaped rims 10a of the panels; the rims 10d are recessed so that the outer surfaces of the coupling section are coplanar to the relative external sections 3.

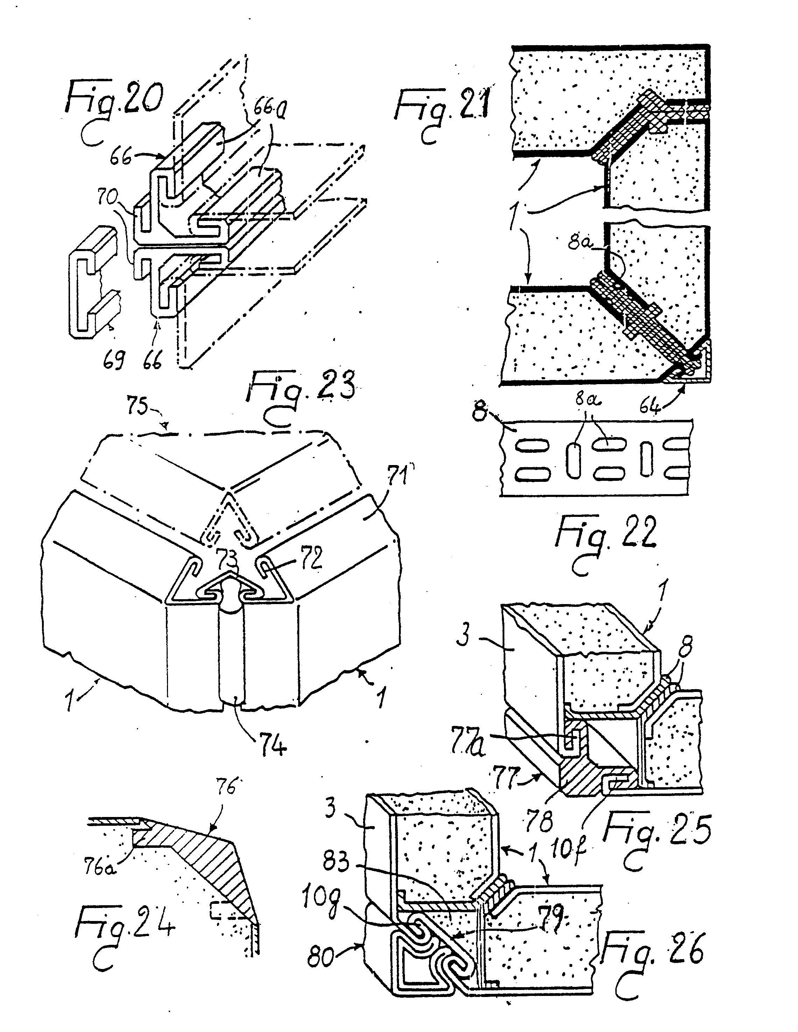

In fig. 18 the edges 66a of the coupling section 66 hook on to rims 10e formed by simply bending the sections 3 outwards to form a U, so that the coupling section forms a kind of bulge along the edge of the coupled panels.

The coupling section 67 in fig. 19 is functionally similar to the previous version, but has a T-shaped section, with the edges 67a, 67b turned back to form a U, for the hooking on of four panels, as described previously, two of which are aligned vertically and two horizontally one on top of the other. A similar cross-shaped coupling section is also foreseen, indicated with a broken line 68 in fig. 18, for the coupling of 8 panels, two by two and back to back to form a cross-shaped coupling.

The T-shaped coupling section can however also be made by placing two L-shped sections together longitudinally, as shown in fig. 20, where they are joined by means of an auxiliary coupling section 69 with a C-shaped section designed to be fitted on longitudinal ribs 70 on the back of L-shaped coupling sections of the type indicated above by no. 66 and positioned symmetrically back to back.

To improve the adherence along the contact plane of the coupled panels, the relative seals 8 can be made with a series of elongated projections 8a (figures 21 and 22) arranged at right angles to each other, which angege with each other when coupled, or alternate circular projections sin the two coupled surfaces.

The rims for the hooking on of the coupling sections, instead of turning outwards, can be turned towards the inside of the panels.

In the case of fig. 23, flanges 71 run along the sides of the panel sections 3, inclined at 45° with respect to the plane of the section and with a rim 72 turned inwards to form a U. These panels are joined by means of a coupling section 73 positioned along the coupling plane defined by the adjacent flanges 71, on the concave side of the coupled panels. The coupling section 73 is C-shaped in order to hook onto the adjacent rims 72. A plastic border 74 is positioned between the flanges 71.

In a similar way it is possible to attach a third panel at right angles to the first two, as shown with the broken line 75. In this case, to close the vertex of the trihedron formed by the panels, it is possible to provide a pyramidal cap 76 (see figure 24), the walls of which form a continuation of the coupling planes defined by the flanges 71. The cap 76 is provided with shanks 76a at the corners, which fit into the corresponding spaces formed by the flanges 71 along the edges.

Fig. 25 shows the connection of two panels placed at right angles, by means of an internal coupling section 77 designed to hook onto rims 10b obtained by bending back the edges of the section 3 towards the inside to form a U. The coupling section 77 consists of an L-shaped section with edges 77a bent outwards to form a U to hook onto the rims 10f. The external part of the coupling section 77 is also shaped to form a poly gonal cross-section longitudinal bulge 78 which acts as a filling element of the hollow edge between the two panels, also having an ornamental function.

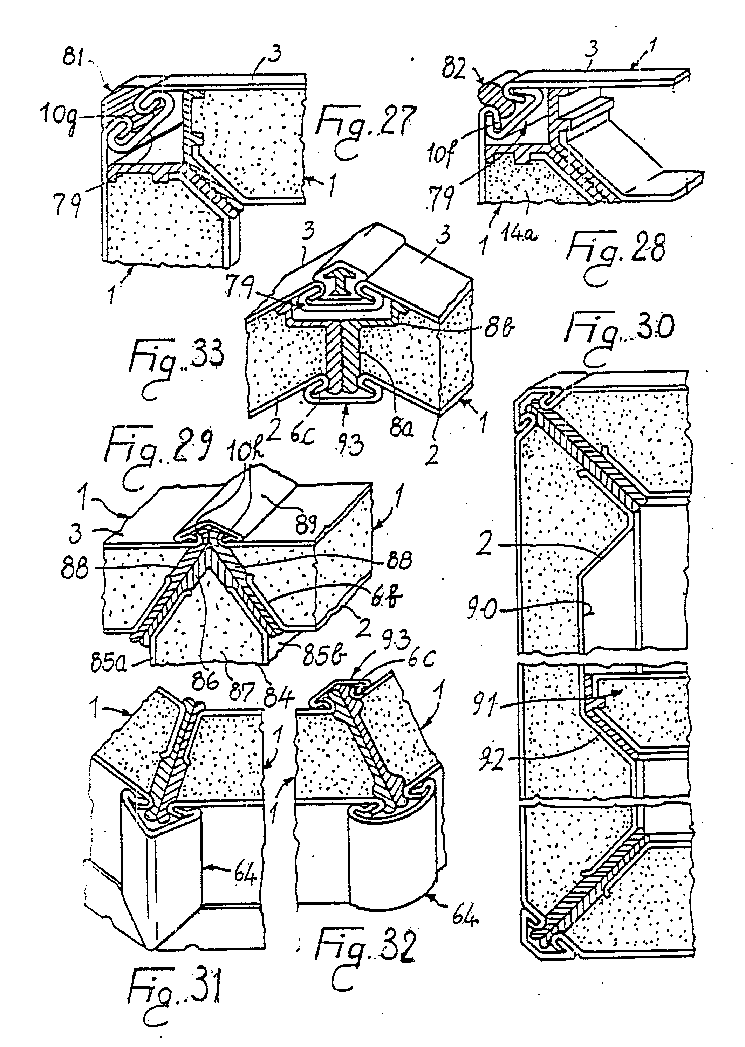

The subsequent figures 26, 27 and 28 show other construction forms for the connection of panels placed at right angles, by means of an internal C-shaped coupling section 79. In particular, in the case of figures 26 and 27 the sections 3 have U-shaped rims log which are inclined at 45° with respect to the plane of the section, while in fig. 28 the sections 3 have rims similar to those previously indicated with lof in fig. 25 and the edges of the coupling section are therefore inclined inwards at 45°.

As a filling element of the hollow edge between the two panels, a section 80 can be used which is inserted between the opposite outer surfaces of the rims log (fig. 26); or solid elements 81 (fig. 27), in metal, hard plastic or elastomeric material 82 (fig. 28) of various shapes, which are similarly inserted between the rims of the sections 3.

It should be noted that the connection of the panels by means of internal coupling sections 77, 79 determines the formation of a prismatic cavity which can be filled if required with a layer of rubber-like material 83.

To construct the shelves of the refrigerator, for example in order to form separate compartmetns, hollow panels of the type indicated with 84 in fig. 29 are used. These shelves are formed from a pair of relative rolled sections 85a, 85b joined by means of a peripheral seal 86 a filled with thermoinsulating material 87.

the shelf 84 is inserted in a housing dfined by connecting coplanar panels by means of coupling sections of the type already described. By way of example, as shown in fig. 29, this housing is defined between the inclined flanges 6 of the sections 2 of the coplanar panels, spaced out by means of enlarged seals 88. The panels are joined together by means of a C-shaped coupling section 89 which hooks onto the turned outwards U-shpaed rims 10h of the panel sections 3 and clamps the seals 88 in place.

It is also possible for the shelf housing to be formed by a recess 90 obtained by bending or molding the rolled section 2, as shown in fig. 30. In this case the shelf 91 is peripherally counter-shaped to fit the support area 92 defined by this recess.

The panels can be joined together at any angle for the construction of refrigerators of various shapes; for example, the type used for the fitting out of bar counters.

Figure 31 illustrates a solution in which the panels enclose an angle greater than 90 degrees.

To make the coupling area more solid, a further coupling section 93 can be fitted, joining the rims 6c which run along the edges of the inner sections, as shown in figure 32.

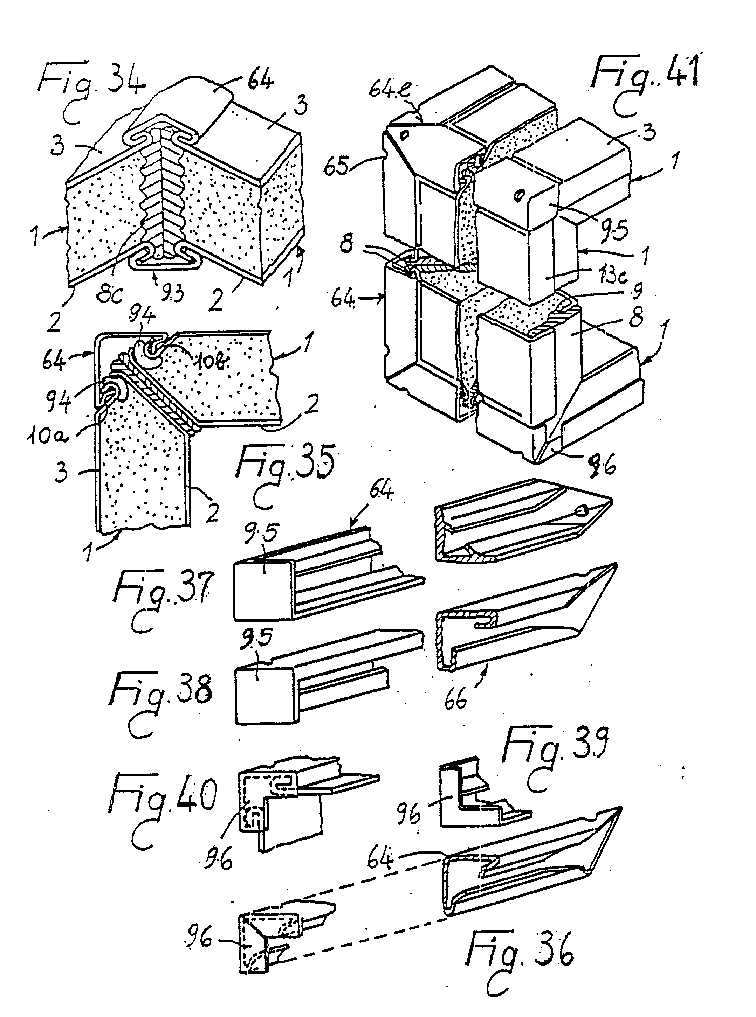

Figure 33 shows a solution which foresees the coupling of both the inner and outer sections, but which differs with respect to the solution in figure 32 by the fact that the seal 8 has a right-angle cross-section, a part of which 89 is clamped between the rims 6c of the inner sections 2, while the part 8b is in contact with the outer sections 3 and forms a seat for the housing of the outer coupling section 79.

Figure 34 shows a solution in which the seals 8 are clamped between the outer and inner sections as in figure 32, but are fitted with ribs 8c to ensure greater adhesion of the filling material.

To avoid direct contact between the flanges 6b of the inner section 2 and the rims 3a, 3b of the outer section 3, it is possible to insert strips 94 between the rims 10a, 10b and the seals 8 (figure 35). The strips 94 are made preferably from plastic material.

The coupling sections must not only hold the panels together, they must also prevent the panels from sliding in the direction of the coupling. For this purpose, the ends of the coupling sections opposite to the angle of convergence of the panels are provided with a stop plate or flat head which rests against the front edge of the panels. Figures 36-40 show two types of square 95 or angled 96 stop plates fitted to the ends of the coupling sections shown previously in figures 14-18.

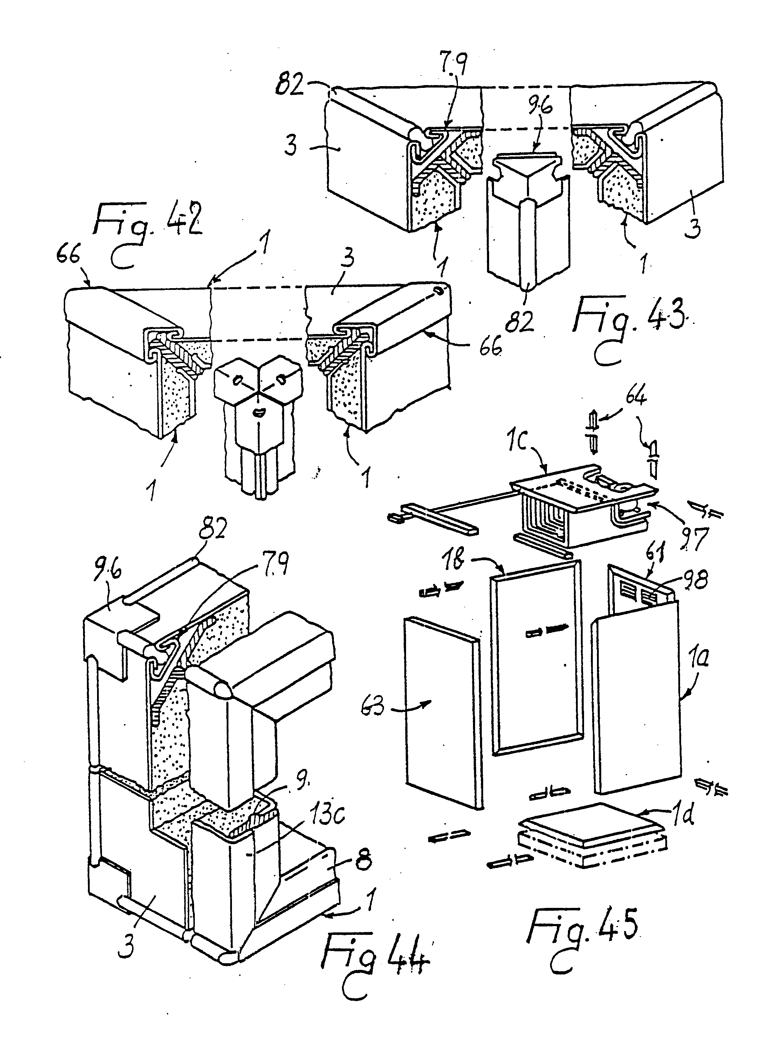

.Figure 41 shows part of a refrigerator, assembled by means of couplings formed from the coupling sections shown in figures 36 and 37.

It should be noted that for panel connection by means of external coupling sections, these can be appropriately shaped to ensure a perfect closure of the angle of convergence of the panels, whether they have rims 10a, 10b which do not protrude from the plane of the sections, as previously shown in figures 15, 16, or whether the rims protrude as shown in figure 42.

On the other hand, in the case of rims turned inwards and thus of inner coupling sections, it is preferable to use caps 96 with housings to receive the borders which define the edges, as shown in figures 43, 44.

As can be seen, the invention described achieves the set aims. By means of the hollow panels it is in fact possible to assemble refrigerators of various shapes and sizes quite simply. In particular, it is possible to assemble panels already fitted with various accessories. Figure 45 shows a solution in shich the upper panel of the refrigerator acts as a support for a refrigerator generator unit 97 and the rear wall has vents 98 for the circulation of exchange air.

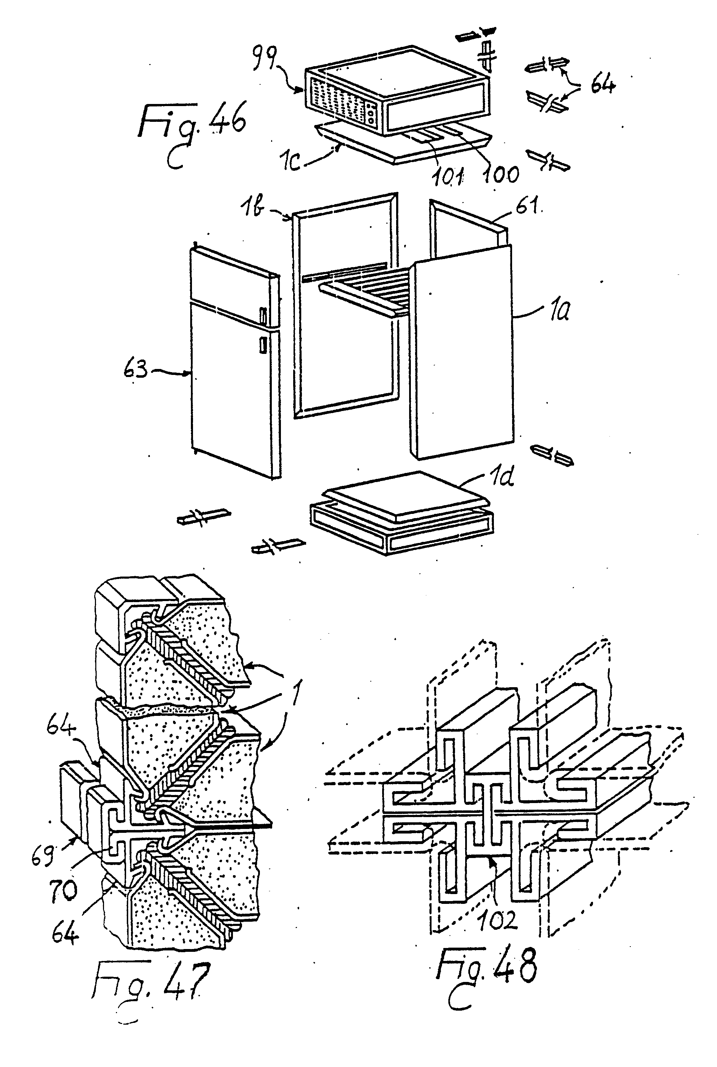

In figure 46 the refrigerator generator unit 99 is mounted on top of the upper panel 1c, which also has vents 100, 101 to allow the circulation of cooling air inside the refrigerator.

As can be seen from the previous figure 20, the invention in question makes it possible to place a series of refrigerator containers one on top of the other, by using coupling sections 66 with longitudinal ribs and auxiliary coupling sections 69. Naturally the same concept can be applied in a similar way by using a solution which foresees the use of coupling sections 64 and which, with respect to the previous solution, offers the advantage of being less protuberant at the sides, as shown in figure 47.

Furthermore, the use of ribs 70 also makes it possible to connect the refrigerators one next to the other, substituting the coupling sections 69 with other double-type sections indicated with 102 in figure 48.

In another variation of the invention, the possibility is envisaged of using perimeter rims for the coupling of auxiliary elements. Figure 49 shows a solution in which the rims 11h of the panels which form the upper and lower walls of the refrigerator are bent perpendicularly to the outer rolled section 3, in the same direction as the front flanges 11c. In this way the rims 11h are positioned adjacent to the rims 11e of the back panel 61 and the side panels 1a, 1b, making it possible to hook on the coupling sections 69 to connect box-type elements 103, 104 forming, for example, a support base for the refrigerator and a container for the control unit. The box-type elements 103, 104 naturally have rims 105, 106 for the hooking on of the coupling sections 69, sufficient to provide a clamping force which ensures a hermetic seal along the contact surfaces of the seals 8.

In the practical setting up of the invention, the materials used, together with the shape and the sizes, can be modified according to requirements.

To ensure greater rigidity in correspondence with the coupling sections which are the areas subject to greater stress, the thickness of the rims can be doubled by bending the perimetral edges 11i of the outer sections back on themselves (fig. 50).

## Claims

1. Procedure for the manufacture of hollow panels consisting of a pair of rolled sections (2, 3 fig. 5a) enclosing filling material (14a) characterized by the fact that it consists of the arrangement of a number of strips (18, 20 fig. 5a and 19, 21 fig. 5b) on a supporting plate (16) of a shaping mold in such a way as to define a cavity (22 fig. 5b) complementary to the shape of a panel, the prepartion of a shell (1) consisting of the said pair of rolled sections (2, 3) and a peripheral seal (8), the positioning of the said shell in the said cavity, the clamping of this shell between the said supporting plate (16) and another plate (25) so that the said shell (1) surrounds a hermetically closed chamber (14) and finally the injection into the said chamber (14), through a perimeter hole (15) in the said shell (1), of filling material (14a) with the desired characteristics.

2. Apparatus for the carrying out of the procedure according to claim 1 characterized by the fact that it consists of a first supporting plate (16 fig. 5a, b), devices for fixing a series of strips (18, 20 fig. 5a and 19, 21 fig. 5b) to the said plate in such as way as to define a semimold containing a cavity to house the said shell, a second plate (25 fig. 5a) which can be applied with pressure against the said strips to hold the said shell locked inside the said cavity and injector devices which can be inserted in the chamber (14 fig. 5a) defined by the said shell to inject the filling material (14a).

3. Apparatus according to claim 2 characterized by the fact that the supporting plate (16 fig. 5b) contains a series of holes (17) to hold the strip supporting pins.

4. Apparatus according to claim 2 or 3 characterized by the fact that it consists of a numer of supporting plates each one supporting a series of strips, thus defining a numer of semimold in which each plate is designed to close the cavity defined by the strips of the adjacent semimold (fig. 7).

5. Apparatus according to claim 4 characterized by the fact that the semimolds can be inserted in packs in a frame (27, 28, 29 fig. 6), where there are pressing devices (31) to clamp the said semimolds tightly against one another.

6. Apparatus according to claim 5 characterized by the fact that the said pressing devices (31) include one or more hydraulic jacks.

7. Apparatus as in claim 2 characterized by the fact that the said strips are knurled (56 fig. 9) so that they can grip onto the said peripheral seal (8) which, in turn, has small raised ribs (56a) to facilitate this grip.

8. Apparatus according to claim 2 characterized by the fact that the supporting plate (16 fig. 5) contains holes for the fitting of the devices for positioning the strips controlled by a program in an automated factory.

9. Hollow panel which can be produced with the procedure according to claim 1 characterized by the fact that it consists of a shell (1) comprising the said pair of rolled sections (2, 3), positioned at a present reciprocal distance and a peripheral seal (8) fitted to the said pair of rolled sections so as to form a hermetically closed chamber (la) designed to be filled with filing material.

10. Panel according to claim 9 characterized by the fact that one rolled section (2) has peripheral flanges (5, 7) designed to match an rib (9) inside the said seal (8) and the other rolled section (3) is peripherally held pressed against the said seal (8).

11. Panel as in claim 9 characterized by the fact that the said shell houses an insert (59 fig. 12) which partially fills the said chamber.

12. Hollow panel according to claim 9 characterized by the fact that the said seal (52 fig. 7) has a slot into which the protuberance of an auxiliary seal 53) is fitted which can be rapidly removed and replaced without the need for tools.

13. Hollow panel according to claim 9, characterized by the fact that its perimetral surfaces are inclined such in a way to allow the coupling of adjacent and perpendicular panels, and comprises components (64 fig. 14) which hook on to rims (10a, 11 fig. 14) along the external edges of said adjacent panels.

14. Refrigerator container obtainable by assembling a plurality of hollow panels according to claim 13.

15. Refrigerator container according to claim 14 characterized by the fact that the said inner rolled section has flanges inclined at 450 with respect to the plane of the said section, while the outer section has respective rims turned back outwards to form a hook.

16. Refrigerator container according to claim 15 characterized by the fact that the said inner rolled section has flanges inclined at 450 with respect to the plane of the said section, while the outer section (3 fig. 26) has respective rims turned inwards to form a hook.

17. Refrigerator container according to claim 14 characterized by the fact that the said inner rolled section has rims turned inwards and the outer section has rims turned inwards (fig. 33) or outwards (fig. 32).

18. Refrigerator container according to one of the claims 14-17 characterized by the fact that the said coupling means consist of sections which cover the longitudinally formed edge of the adjacent panels and have appropriately angled inner ribs for hooking onto the rims of the panels themselves.

19. Refrigerator container according to one of the claims 15-17 characterized by the fact that the said coupling means consist of sections obtained from a C-shaped section which has edges turned back for hooking onto the said panel rims (figg. 14, 17, 28).

20. Refrigerator container according to the claim 16 or 17 characterized by the fact that a seal in elastomeric material (74 fig. 23) is placed between the rims of the outer section bent back inwards.

21. Refrigerator container according to the claims 1-9 characterized by the fact that a closing cap is fitted at the angle of convergence of three panels at right angles to each other.

22. Refrigertor container according to the claim 13 characterized by the fact that it consists of a shelf made from a pair of sections (85a, 85b fig. 29) joined by means of a peripheral seal (86) and filled with thermoinsulating material (87), this shelf having a triangular outline peripherally and being designed to be inserted in a housing obtained by connecting coplanar panels by means of relative coupling sections and defined between the inclined perimetral faces of the panels themselves.

23. Refrigerator container according to claim 13 characterized by the fact that it consists of a shelf made from a pair of sections joined by means of a peripheral seal and filled with thermoinsulating material, this shelf being designed to be inserted in a housing (90 fig. 30) obtained by bending or molding of a rolled section (2) which forms the inner surface of the said shell of the hollow panels.

24. Refrigerator container according to claim 18 or 19 characterized by the fact that the said coupling sections consist of T-shaped sections with the edges forming ribs for hooking onto the panel rims (fig. 19).

25. Refrigerator container according to the claim 18 or 19 characterized by the fact that the sections have external ribs (70 fig. 20) for the hooking on of an auxiliary strip (69) with a C-shaped cross-section to join a pair of symmetrically arranged coupling sections.

26. Refrigerator container according to claim 13 characterized by the fact that the upper panel (fig. 45) or the lower panel act as a support for a refrigerator unit (97).

27. Refrigerator container according to claim 13 characterized by the fact that the upper panel and the lower panel have peripheral rims (11e, 11h fig. 49) to permit the hooking of of box-like elements (103, 104).

28. Refrigerator container according to claim 13 characterized by the fact that the said rims (11i fig. 50) have a double thickness.

29. Refrigerator container according to claim 18 or 19 characterized by the fact htat the said coupling sections have stop plates (95, 96 figg. 36-40) on the front edges of the refrigerator. 30. Refrigerator container according to claim 13 characterized by the fact that the said shells are formed in such a way as to allow the construction of polyhedric containers (48a fig. 6).

*Fig.1*

*Fig.2*

*Fig.3*

EP 0 408 510 A2

# Fig.4

## Fig.5

c)

b)

a)

b)

a)

13

4

8

18

26

16

12

7

5

21

18

13

24

3

9

8

15

26

2

11

16

10

19

3

14

14a

1

2

9

17

10

23

20

17

22

25

20

Fig.6

*Fig.7*

40
39
16
52
51
50
49
16
17

*Fig.8*

3
52
55
54
53
2

Fig. 9

Fig. 10

Fig. 11

Fig. 12

Fig. 13

Fig. 14

Fig. 15

Fig. 16

Fig. 17

Fig. 18

Fig. 19

Fig.20

Fig.21

Fig. 23

Fig. 22

Fig.24

Fig. 25

Fig. 26

Fig. 27

Fig. 28

Fig. 33

Fig. 29

Fig. 30

Fig. 31

Fig. 32

EP 0 408 510 A2

Fig. 34

Fig. 41

Fig. 35

Fig. 37

Fig. 38

Fig. 39

Fig. 40

Fig. 36

20

Fig. 42

Fig. 43

Fig. 44

Fig. 45

Fig. 46

99

1c

101 100

64

1b

61

63

1a

1d

64

69

70

64

1

Fig. 47

102

Fig. 48

22

*Fig.49*

*Fig. 50*